# EUROPÄISCHE PATENTSCHRIFT

(11) **EP 0 714 354 B1**
(45) Veröffentlichungstag und Bekanntmachung des Hinweises auf die Patenterteilung: **27.12.1996**
(21) Anmeldenummer: 94925474.2
(22) Anmeldetag: 25.08.1994
(51) Int. Cl.: B60K 41/06, B60R 16/02

(54) **STEUERUNG FÜR EIN KRAFTFAHRZEUG**
MOTOR VEHICLE CONTROL
COMMANDE POUR VEHICULES A MOTEUR

(30) Priorität: 26.08.1993 DE 93113672
(43) Veröffentlichungstag der Anmeldung: 05.06.1996
(73) Patentinhaber: SIEMENS AKTIENGESELLSCHAFT, 80333 München (DE)
(72) Erfinder: GRAF, Friedrich, D-93059 Regensburg (DE); SCHÄFER, Joachim, D-94369 Rain (DE); STORJOHANN, Kai, D-93053 Regensburg (DE); ULM, Michael, D-93087 Alteglofsheim (DE)
(86) Internationale Anmeldenummer: EP9402808
(87) Internationale Veröffentlichungsnummer: WO9505951

(56) Entgegenhaltungen:
- EP-A- 0 388 107
- EP-A- 0 425 199
- EP-A- 0 532 363
- EP-A- 0 554 465
- DE-A- 4 021 251
- US-A- 4 703 428
- US-A- 4 945 481

## Beschreibung

Die Erfindung betrifft eine Steuerung nach dem Oberbegriff von Anspruch 1. Solche Steuerungen in einem Kraftfahrzeug mit automatischem Getriebe schließen eine Motorsteuerung und eine Getriebesteuerung ein. Es gibt sie in unterschiedlichen Ausführungen.

Bei einer bekannten integrierten Steuerung für das automatische Getriebe und den Motor eines Kraftfahrzeugs wird das Getriebe durch ein eigenständiges, von der Motorsteuerung getrenntes Steuergerät gesteuert (US-A-4 945 481).

Eine Getriebesteuerung hat im wesentlichen folgende Funktionen auszuführen:
- eine Schaltübergangssteuerung, die für ein weiches und verschleißfreies Einlegen der einzelnen Gänge sorgt;
- eine Steuerung der Wandlerüberbrückungskupplung;
- eine Schaltlogik, die den jeweils einzulegenden Gang festlegt;
- eine Eigendiagnose, und
- Basisfunktionen, wie z.B. Ein- und Ausgabefunktionen.

Da die Schaltübergangssteuerung getriebespezifisch ausgelegt werden muß, die Auslegung der Schaltlogik aber unter anderem von Daten des Motors und des Chassis des Kraftfahrzeugs abhängt, ergibt sich eine große Anzahl unterschiedlicher Varianten der Steuerung für die verschiedenen Kraftfahrzeugtypen. Außerdem ist der Aufwand für den Kabelbaum zwischen der Getriebesteuerung und den verschiedenen Ventilen und Sensoren im Getriebe recht hoch.

Eine kombinierte Motor-und Getriebesteuerung gemäß dem Oberbegriff des Anspruches 1 ist aus der EP-A-0 388 107 bekannt.

Der Erfindung liegt die Aufgabe zugrunde, die Anzahl der erforderlichen Varianten der Steuerung zu verringern. Diese Aufgabe wird erfindungsgemäß durch die Steuerung nach Anspruch 1 gelöst. Zweckmäßige Weiterbildungen der Erfindung sind in den Unteransprüchen niedergelegt.

Die Vorteile der Erfindung liegen insbesondere darin, daß der Aufwand für die Verkabelung und die Kommunikation im Kraftfahrzeug deutlich verringert wird. Die chassis- und motorspezifischen Funktionen der Getriebesteuerung sind in die Motorsteuerung, während die rein getriebespezifischen Funktionen in einer rechnergesteuerten Gangwechseleinrichtung enthalten sind. Diese stellt einen "intelligenten" Aktor dar, der bei dem Hersteller des Getriebes vollständig getestet wird. Dies ergibt einen nicht unerheblichen Logistikvorteil.

Die Erfindung wird im folgenden anhand der Zeichnung erläutert. Es zeigen:
- Figur 1: die wesentlichen Bestandteile eines Kraftfahrzeugantriebs, der mit einer erfindungsgemäßen Steuerung versehen ist, und
- Figur 2: die Steuerung des Antriebs nach Figur 1, als Blockdiagramm dargestellt.

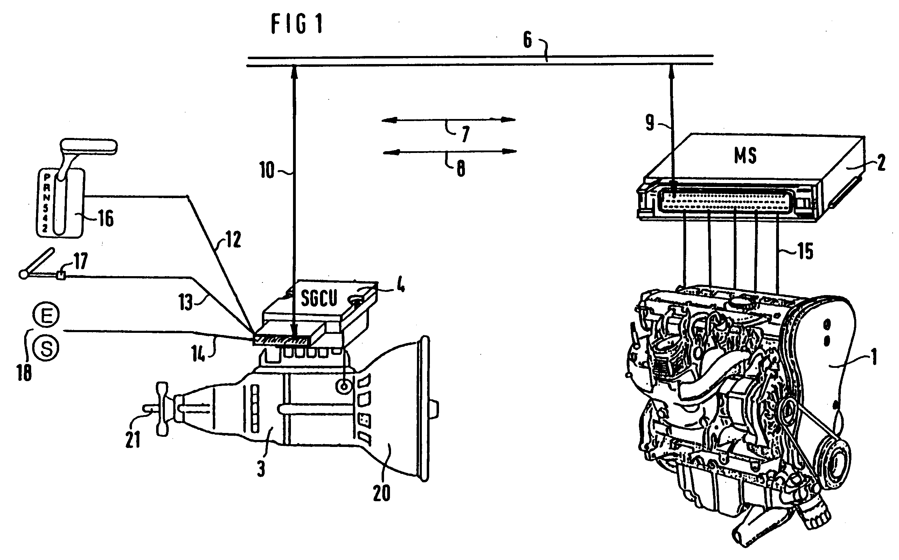

Ein Motor 1 wird von einer Motorsteuerung 2 und ein Getriebe 3 von einer Gangwechseleinrichtung 4 gesteuert (Figur 1). Die Motorsteuerung 2 und die Gangwechseleinrichtung 4 sind durch einen Kommunikationskanal 6 verbunden, der z.B. als CAN-Bus realisiert ist. Dieser Bus ist hier nur schematisch dargestellt, er ist allgemein bekannt und in vielen Veröffentlichungen beschrieben.

Zwischen der Motorsteuerung 2 und der Gangwechseleinrichtung 4 werden zum einen Daten ausgetauscht, die zur Gangwahl dienen und durch einen Pfeil 7 angedeutet sind, und zum anderen Konfigurationsparameter, die der Anpassung an das jeweilige Kraftfahrzeug dienen und die durch einen Pfeil 8 angedeutet sind. Beispiele der über den Kommunikationskanal 6 übertragenen Daten werden weiter hinten aufgeführt.

Der bidirektionale Anschluß der Motorsteuerung 2 an den Kommunikationskanal 6 ist durch eine Leitung 9 schematisch angedeutet, der ebenfalls bidirektionale Anschluß der Gangwechseleinrichtung 4 an den Kommunikationskanal 6 durch eine Leitung 10.

Durch Signalleitungen 12, 13 und 14 sind ein Wählhebel 16, ein Kickdown-Schalter 17 und ein Fahrprogramm-Wählschalter 18 an die Gangwechseleinrichtung 4 angeschlossen. Über diese Bedienungselemente gibt der Fahrer in bekannter Weise seine Befehle oder Wünsche in die Gangwechseleinrichtung 4 ein: die Fahrstufen P, R, N, S, 1 und 2 über den Wählhebel 16, die Anforderung einer starken Beschleunigung über den Kickdown-Schalter 17 und die Auswahl zwischen einem "Economy"- und einem "Sport"-Fahrprogramm über den Fahrprogramm-Auswahlschalter 18.

Der Motor 1 ist durch Steuer- und Signalleitungen 15 mit der Motorsteuerung 2 verbunden. Über diese Signalleitungen werden Sensorsignale über die Motordrehzahl, die Motortemperatur und andere bekannte Betriebsparameter von dem Motor 1 an die Motorsteuerung 2 übertragen, und von dieser werden Befehle zum Steuern der Zündung, der Kraftstoff-Einspritzmenge, des Zündzeitpunktes und gfs. anderer bekannter Motorparameter an den Motor 1 übermittelt.

Der Motor 1 und das Getriebe 3 sind hier der besseren Übersichtlichkeit wegen getrennt dargestellt, es ist aber allgemein bekannt, daß die Abtriebswelle des Motors 1 direkt an den Drehmomentwandler 20 des Getriebes 3 angeschlossen ist. Entsprechend ist auch die Ausgangswelle 21 an den Abtriebsstrang des Kraftfahrzeugs angeschlossen. Das Chassis, die Radaufhängungen, die Räder und weitere Bestandteile des Kraftfahrzeugs sind hier nicht dargestellt, da sie von der Erfindung nicht betroffen und allgemein bekannt sind.

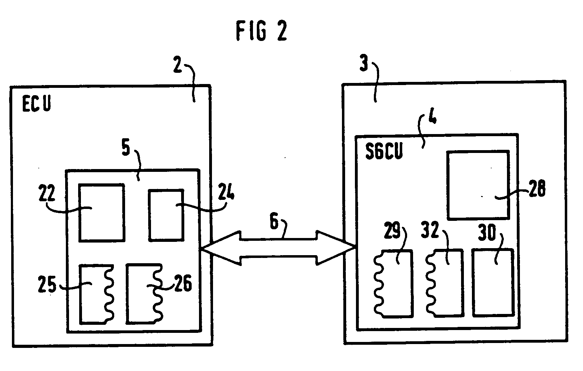

In die Motorsteuerung 2 (Figur 2) sind - unter dem Bezugszeichen 5 zusammengefaßt - einige der Funktionseinheiten einer Getriebesteuerung, die chassis- oder motorspezifisch sind, d.h. von Daten des Motors und des Chassis des Kraftfahrzeugs abhängen, in die Motorsteuerung integriert: eine Schaltlogik oder Schaltpunktwahl-Steuerung 22, eine Fahrer- oder Fahrverhalten-Klassifikation 24, eine Diagnoseschaltung 25 und Basismodule 26, die z.B. Daten Ein- und -Ausgabeprozeduren durchführen. Die Schaltlogik 22 kann als Fuzzy-Steuerung ausgebildet sein und in diesem Fall auch die Funktionen Fahrer- oder Fahrverhalten-Klassifikation, Fahrstreckenbewertung und dynamische Schaltpunktkorrektur enthalten (vgl. unsere ältere Patentanmeldung EP-A-0 622 570).

Die rechnergesteuerte Gangwechseleinrichtung 4 - auch als SGCU (Smart Gear Change Unit) bezeichnet - enthält im wesentlichen nur Funktionseinheiten, die von Daten des Getriebes abhängig sind. Es sind dies eine Schaltablaufsteuerung 28 eine Diagnoseschaltung 29 für die Aktoren, eine Steuerung 30 der Wandlerüberbrückungskupplung oder TCC (Torque Converter Clutch) und Basismodule 32, die z.B. die Signale von bekannten getriebenahen Sensoren verarbeiten, z.B. von Drehzahlsensoren im Getriebe, von Temperatur- und von HydraulikdruckSensoren im Getriebe usw.

Die Gangwechseleinrichtung 4 ist so ausgeführt, daß nur eine minimale chassis- und motorabhängige Parametrierung ihrer Funktionen notwendig ist, d.h. daß sie nur sehr wenige Daten des Chassis und des Motors des jeweiligen Kraftfahrzeugs enthalten muß. Durch diese Aufteilung der Funktionen zwischen der Motorsteuerung und der Gangwechseleinrichtung wird der Aufwand für die Verkabelung zwischen der Motorsteuerung, der Gangwechseleinrichtungen sowie den Sensoren und Aktoren - die hier nicht dargestellt sind, da sie allgemein bekannt sind und durch die Erfindung nicht verändert werden - sehr verringert.

Die Gangwechseleinrichtung 4 ist direkt an dem Gehäuse des Getriebes 3 befestigt oder in diesem Gehäuse untergebracht. Sie wird von dem Hersteller zusammen mit dem Getriebe als eine Einheit geliefert.

Zwischen der Motorsteuerung (MS) 2 und der Gangwechseleinrichtung (SGCU) 4 werden über den Kommunikationskanal Zustandsgrößen Z und Steuergrößen S ausgetauscht. Ein Beispiel für die auszutauschenden Daten ist in der nachfolgenden Tabelle dargestellt. In ihr bedeutet WK die Wandlerüberbrückungskupplung des Getriebes.

| **MS an SGCU** | **Typ** | **SGCU an MS** | **Typ** |
|---|---|---|---|
| M_{mot,ist}(Motor-Istmoment) | Z | | Z |
| Üₛₒₗₗ(Soll-Übersetzung) | S | Ü_{soll,o.k.}(Akzeptanz Sollübersetzg) | Z |
| | | Üᵢₛₜ (Ist-Übersetzung) | Z |
| WK-Schlupfₛₒₗₗ (WK-Sollschlupf) | S | WK-Schlupfᵢₛₜ (WK-Istschlupf) | Z |
| | | Fehlerstatus der SGCU | Z |
| | | Fehlfunktion der SGCU | Z |
| | | Funktionseinschränkung der SGCU | Z |
| M_{red,ist} (Ist-Momentreduktion) | Z | M_{red,soll} (Soll-Momentreduktion) | S |
| | | Getriebetemperatur | Z |
| | | Wandlerverstärker | Z |
| | | Wählhebelposition | Z |

Zusätzlich zu einem derartigen Datenaustausch können auch Parameter, die zum Steuern des Gangwechselprozesses erforderlich sind, zwischen der Motorsteuerung 2 und der Gangwechseleinrichtung 4 über den Kommunikationskanal 6 ausgetauscht werden. Diese Parameter werden zweckmäßigerweise als physikalische Einheiten übertragen. Ein Beispiel für zu übertragende Parameter ist in nachfolgender Tabelle dargestellt.

| **MS an SGCU** | **SGCU an MS** |
|---|---|
| Massenträgheitsmoment | Ganganzahl |
| Wagenmasse | Übersetzungsverhältnisse |
| Radgröße | Schaltungsarten |

Als Schaltungsarten werden hier die von dem jeweiligen Getriebe abhängigen zulässigen Gangwechsel bezeichnet. So ist zum Beispiel eine Rückschaltung von dem fünften in den ersten oder zweiten, teilweise auch in den dritten, Gang bei vielen Getrieben nicht zugelassen.

Hieraus ergeben sich folgende Vorteile: von der Gangwechseleinrichtung 4 wird nur ein Minimum an motor- und chassisspezifischen Daten benötigt. Sie ist vollständig unabhängig von Daten des Motors und des Chassis. In der Motorsteuerung 2 wird nur ein Minimum an getriebespezifischen Daten benötigt. Daraus folgt, daß die Gangwechseleinrichtung bei der Herstellung nicht an unterschiedliche Motor- und Chassisvarianten angepaßt werden muß. Der in der Gangwechseleinrichtung enthaltene Mikroprozessor oder Rechner - hier nicht dargestellt, da allgemein bekannt - sorgt dafür, daß eine Anpassung anhand von übertragenen Motor- und Chassis-Parametern durchgeführt wird. Eine andere Möglichkeit ist es, Datensätze für die verschiedenen Fahrzeugvarianten in der Gangwechseleinrichtung 4 zu speichern und jeweils den Datensatz einer dieser Varianten durch ein Codewort zu aktivieren, das über den Kommunikationskanal 6 an die Gangwechseleinrichtung 4 übertragen wird.

Neben der Übermittlung von physikalischen Parametern, Zustands- und Steuergrößen können auch Identifikationsinformationen zwischen der Motorsteuerung und der Gangwechseleinrichtung ausgetauscht werden. Damit wird folgendes erreicht.

Werden z.B. im Rahmen von Reparaturen Komponenten ausgetauscht, so ist vorgesehen, daß die Komponenten über den Kommunikationskanal 6 Identifikationsdaten austauschen, die variantenspezifisch sind, d.h. den Kraftfahrzeugtyp identifizieren für den die jeweilige Komponente geeignet ist. Damit sind die anderen Komponenten oder Steuergeräte in der Lage festzustellen, ob sie miteinander funktionsfähig sind. Auf diese Art wird erkannt, ob z.B. versehentlich ein für das Kraftfahrzeug ungeeignetes Getriebe eingebaut worden ist.

Durch diesen Austausch von steuergerätespezifischen Identifikationsdaten läßt sich außerdem ein nicht autorisierter Austausch von Komponenten oder Geräten unterbinden. Dadurch kann z.B. die Reparatur durch nichtautorisierte Werkstätten und insbesondere der Einbau von gestohlenen Geräten in ein Kraftfahrzeug oder von Austauschkomponenten in ein gestohlenes Kraftfahrzeug wirksam unterbunden werden. Damit wird auch ein verbesserter Diebstahlschutz erreicht.

## Patentansprüche

1. Steuerung für ein Kraftfahrzeug mit einem automatischen Getriebe (3), die eine Getriebesteuerung und eine Motorsteuerung (2) einschließt, welche durch einen Kommunikationskanal (6) miteinander verbunden sind, wobei
- Teile der Steuerung, die von Daten des Getriebes (3) abhängig sind, in einer rechnergesteuerten Gangwechseleinrichtung (4) des Getriebes enthalten sind, und
- die zum Steuern des Getriebes (3) erforderlichen Daten zwischen der Motorsteuerung (2) und der Gangwechseleinrichtung (4) über den Kommunikationskanal (6) ausgetauscht werden,
**dadurch gekennzeichnet,**
- daß eine von Daten des Motors (1) und des Chassis des Kraftfahrzeugs abhängige Schaltpunktauswahlsteuerung (22) in die Motorsteuerung (2) integriert ist.

2. Steuerung nach Anspruch 1, dadurch gekennzeichnet, daß in der Motorsteuerung (2) Schaltungseinrichtungen enthalten sind, durch die das Fahrverhalten (24) des Fahrers klassifiziert und durch die (22) die von dem Kraftfahrzeug befahrene Strecke bewertet und eine dynamische Schaltpunktkorrektur durchgeführt wird.

3. Steuerung nach Anspruch 1, dadurch gekennzeichnet, daß von der Motorsteuerung (2) Daten über das Motor-Istmoment, die Soll-Getriebeübersetzung, den Sollschlupf der Wandlerüberbrückungskupplung und die Reduktion des Motor-Istmoments an die Gangwechseleinrichtung (4) übermittelt werden.

4. Steuerung nach Anspruch 1, dadurch gekennzeichnet, daß von der Gangwechseleinrichtung (4) Daten über die Annahme der Soll-Getriebeübersetzung, die Ist-Getriebeübersetzung, den Ist-Schlupf einer Wandlerüberbrückungskupplung und die Soll-Momentenreduktion an die Motorsteuerung (2) übermittelt werden.

5. Steuerung nach Anspruch 1, dadurch gekennzeichnet, daß von der Gangwechseleinrichtung (4) Daten über Fehler und Funktionseinschränkungen der Gangwechseleinrichtung, über die Getriebetemperatur, über die Wandlerverstärkung und über die Wählhebelposition an die Motorsteuerung übermittelt werden.

6. Steuerung nach Anspruch 1, dadurch gekennzeichnet, daß beim Einschalten der Zündung zwischen der Motorsteuerung (2) und der Gangwechseleinrichtung(4) Parameter des Kraftfahrzeugs und des Getriebes (3) über den Kommunikationskanal (6) ausgetauscht werden.

7. Steuerung nach Anspruch 6, dadurch gekennzeichnet, daß von der Motorsteuerung (2) folgende Parameter des Kraftfahrzeugs an die Gangwechseleinrichtung (4) übermittelt werden: reduziertes Massenträgheitsmoment am Getriebeabtrieb, Masse des Kraftfahrzeugs und Radgröße.

8. Steuerung nach Anspruch 6, dadurch gekennzeichnet, daß von der Gangwechseleinrichtung (4) folgende Parameter des Getriebes an die Motorsteuerung (2) übermittelt werden: Anzahl der Getriebegänge, Übersetzungen der Getriebegange, Daten des Drehmomentwandlers und Schaltungsarten (mögliche Gangwechsel).

9. Steuerung nach Anspruch 1, dadurch gekennzeichnet, daß die Schaltpunktauswahlsteuerung (22) eine Fuzzy-Logik-Steuerung enthält.

## Claims

1. Control for a motor vehicle with an automatic gearbox (3), which control includes a gearbox control and an engine control (2) which are connected to one another by means of a communication channel (6),
- parts of the control which are dependent on data of the gearbox (3) being contained in a computer-controlled gear changing arrangement (4) of the gearbox, and
- the data which are necessary for controlling the gearbox (3) being exchanged between the engine control (2) and the gear changing arrangement (4) via the communication channel (6), characterized
- in that a shift point selection control (22) which is dependent on data of the engine (1) and of the chassis of the motor vehicle is integrated into the engine control (2).

2. Control according to Claim 1, characterized in that circuit devices are contained in the engine control (2), by means of which circuit devices the driving characteristics (24) of the driver are classified and by means of which (22) the route travelled over by the motor vehicle is evaluated and a dynamic shift point correction is carried out.

3. Control according to Claim 1, characterized in that data relating to the actual engine torque, the desired gearbox transmission ratio, the desired slip of the converter lockup clutch and the reduction of the actual engine torque are transferred to the gear changing arrangement (4) by the engine control (2).

4. Control according to Claim 1, characterized in that data relating to the acceptance of the desired gearbox transmission ratio, the actual gearbox transmission ratio, the actual slip of a converter lock-up clutch and the desired torque reduction are transferred to the engine control (2) by the gear changing arrangement (4).

5. Control according to Claim 1, characterized in that data relating to faults and restrictions in the functioning of the gear changing arrangement, relating to the gearbox temperature, relating to the converter boosting and relating to the gear-selection lever position are transferred to the engine control by the gear changing arrangement (4).

6. Control according to Claim 1, characterized in that parameters of the motor vehicle and of the gearbox (3) are exchanged between the engine control (2) and the gear changing arrangement (4) via the communication channel (6) when the ignition is switched on.

7. Control according to Claim 6, characterized in that the following parameters of the motor vehicle are transferred to the gear changing arrangement (4) by the engine control (2): reduced mass moment of inertia at the gearbox power output, mass of the motor vehicle and wheel size.

8. Control according to Claim 6, characterized in that the following parameters of the gearbox are transferred to the engine control (2) by the gear changing arrangement (4): number of gearbox gears, transmission ratios of the gearbox gears, data of the torque converter and shift types (possible gear changes).

9. Control according to Claim 1, characterized in that the shift point selection control (22) contains a fuzzy logic control.

## Revendications

1. Commande pour un véhicule à moteur, comportant une boîte de vitesses automatique (3) qui comporte une commande de boîte de vitesses et une commande de moteur (2), reliées entre elles par un canal de communication (6), dans laquelle
- des parties de la commande dépendant de données de la boîte de vitesses (3), sont contenues dans un dispositif de changement de vitesses (4) commandé par ordinateur, de la boîte de vitesses, et
- les données nécessaires pour commander la boîte de vitesses (3) sont échangées, entre la commande de moteur (2) et le dispositif de changement de vitesses (4), par l'intermédiaire du canal de communication (6),
caractérisée en ce qu'une commande (22) choisissant le point de changement de vitesse en fonction de données du moteur (1) et du châssis est intégrée dans la commande de moteur (2).

2. Commande suivant la revendication 1, caractérisée en ce que, dans la commande de moteur (2), sont contenus des dispositifs de changement de vitesses, au moyen desquels le comportement de conduite (24) du conducteur est classifié, et au moyen desquels (22), le trajet parcouru par le véhicule à moteur est évalué, et une correction dynamique du point de changement de vitesses est déterminée.

3. Commande suivant la revendication 1, caractérisée en ce que, par la commande de moteur (2), des données sur la valeur réelle du couple moteur, la valeur de consigne du rapport de transmission de la boîte de vitesses, la valeur de consigne du glissement de l'embrayage associé au convertisseur de couple et la réduction de la valeur réelle du couple du moteur, sont transmises au dispositif de changement de vitesses (4).

4. Commande suivant la revendication 1, caractérisée en ce que, par le dispositif de changement de vitesses (4), des données sur l'acceptation de la valeur de consigne du réelle du rapport de transmission de la boîte de vitesses, la valeur réelle du glissement d'un embrayage convertisseur de couple, et la valeur de consigne de la réduction du couple sont transmises à la commande de moteur (2).

5. Commande suivant la revendication 1, caractérisée en ce que, par le dispositif de changement de vitesses (4), des données sur des défauts ou des limitations de fonctionnement du dispositif de changement de vitesses, sur la température de la boîte de vitesses, sur le renforcement du convertisseur et sur la position du levier de sélection sont transmises à la commande de moteur.

6. Commande suivant la revendication 1, caractérisée en ce que, lors du lancement de l'allumage, entre la commande de moteur (2) et le dispositif de changement de vitesses (4), des paramètres concernant le véhicule à moteur et la boîte de vitesses (3) sont échangés par l'intermédiaire du canal de communication (6).

7. Commande suivant la revendication 6, caractérisée en ce que, par la commande de moteur (2), des paramètres ci-après, concernant le véhicule à moteur, sont transmis au dispositif de changement de vitesses (4): moment réduit d'inertie de masse à la sortie de la boîte de vitesses, masse du véhicule à moteur et grandeur des roues.

8. Commande suivant la revendication 6, caractérisée en ce que, par le dispositif de changement de vitesses (4), des paramètres ci-après, concernant la boîte de vitesses, sont transmis à la commande de moteur (2): nombre des vitesses de la boîte de vitesses, rapports de transmission des vitesses de la boîte de vitesses, données du convertisseur de couple, et type de changement de vitesses (changements de vitesses possibles).

9. Commande suivant la revendication 1, caractérisée en ce que la commande du choix du point de changement de vitesses (22) comporte une commande à logique floue.
